# EUROPÄISCHE PATENTSCHRIFT

(11) **EP 3 269 032 B1**
(45) Veröffentlichungstag und Bekanntmachung des Hinweises auf die Patenterteilung: **10.05.2023**
(21) Anmeldenummer: 16709402.8
(22) Anmeldetag: 10.03.2016
(51) Int. Cl.: H02M 7/04, H02M 7/217, H02J 7/00, B25F 5/00

(54) **WERKZEUGAKKU, NETZBETREIBBARE HANDWERKZEUGMASCHINE UND WERKZEUGSYSTEM**
BATTERY PACK FOR A POWER TOOL, GRID SUPPLIED POWER TOOL AND POWER TOOL SYSTEM
BATTERIE D'OUTIL PORTATIF, OUTIL PORTATIF CONNECTÉ AU RÉSEAU D'ALIMENTATION ET SYSTÈME D'OUTIL

(30) Priorität: 10.03.2015 EP 15158345
(43) Veröffentlichungstag der Anmeldung: 17.01.2018
(73) Patentinhaber: Hilti Aktiengesellschaft, 9494 Schaan (LI)
(72) Erfinder: ZIEGLER, Bernd, 86856 Hiltenfingen (DE); CECCHIN, Holger, 82178 Puchheim (DE); MEIXNER, Ralf, 87656 Germaringen (DE)
(74) Vertreter: Hilti Aktiengesellschaft Corporate Intellectual Property
(86) Internationale Anmeldenummer: PCT/EP2016/055113
(87) Internationale Veröffentlichungsnummer: WO 2016/142461

(56) Entgegenhaltungen:
- EP-A2- 0 951 135
- JP-A- 2011 148 069
- US-A- 5 715 156
- US-A1- 2003 173 940
- US-A1- 2003 173 940
- "Quantensprung: Akku und Netz in einem Bohrhammer", , 1. März 2012 (2012-03-01), XP055215767, Gefunden im Internet: URL:http://www.kress-elektrik.com/fileadmi n/DAM/News/Kress_PR_BiPower_de.pdf [gefunden am 2015-09-23]

## Beschreibung

Die vorliegende Erfindung betrifft einen Werkzeugakku, insbesondere zur Versorgung einer Handwerkzeugmaschine wie beispielsweise einem Bohrhammer oder Kombihammer. Der Werkzeugakku weist ein Werkzeugakkugehäuse mit einer darin angeordneten Sekundärzellenbatterie auf, die eine Zellen-Nennspannung aufweist.

Die vorliegende Erfindung betrifft ebenfalls eine netzbetreibbare Handwerkzeugmaschine, insbesondere Bohrhammer oder Kombihammer, mit einem Werkzeuggehäuse und einem darin angeordneten elektrischen Antriebsmotor. Die Handwerkzeugmaschine weist einen eingangsseitig mit einem Wechselspannungsnetz verbindbaren Gleichrichter (AC-DC-Wandler) auf, der ausgebildet ist, eine Netzwechselspannung in eine Zwischenkreisgleichspannung eines Zwischenkreises der Handwerkzeugmaschine umzurichten. Die Handwerkzeugmaschine weist weiter einen Motorgleichspannungswandler (DC-DC-Wandler) auf, der eingangsseitig mit dem Gleichrichter und ausgangsseitig mit dem elektrischen Antriebsmotor verbunden ist. Der Gleichspannungswandler ist ausgebildet, die Zwischenkreisgleichspannung in eine Motorversorgungsspannung umzuwandeln.

Des Weiteren betrifft die vorliegende Erfindung ein Werkzeugsystem mit einer netzbetreibbaren Handwerkzeugmaschine und einem Werkzeugakku.

Es ist Aufgabe der vorliegenden Erfindung, einen Werkzeugakku, eine netzbetreibbare Handwerkzeugmaschine sowie ein Werkzeugsystem anzugeben, die einen erweiterten Einsatzbereich bieten.

Bezüglich des Werkzeugakkus wird die Aufgabe dadurch gelöst, dass der Werkzeugakku einen im Werkzeugakkugehäuse integrierten Akku-Gleichspannungswandler aufweist, der mit der Sekundärzellenbatterie elektrisch verbunden und ausgebildet ist, die Sekundärzellenbatteriespannung auf eine Versorgungsspannung anzuheben, die an einem Werkzeugakkuanschluss des Werkzeugakkus abgreifbar ist.

Vorteilhafterweise kann ein Werkzeugakku mit einer vorgegebenen Zellen-Nennspannung nun für die Versorgung von Handwerkzeugmaschinen verwendet werden, die beispielsweise mit einer Zwischenkreisgleichspannung zu betreiben sind, die über einer typischen Zellen-Nennspannung eines Werkzeugakkus liegt. Durch den im Werkzeugakkugehäuse integrierten Akku-Gleichspannungswandler (DC-DC-Wandler) kann vorteilhafterweise eine Spannung der Sekundärzellenbatterie des Werkzeugakkus auf eine Versorgungsspannung angehoben werden, die einer Zwischenkreisgleichspannung einer Handwerkzeugmaschine, insbesondere netzbetreibbaren Handwerkzeugmaschine, entspricht.

In einer bevorzugten Ausgestaltung beträgt die Zellen-Nennspannung weniger als 42 Volt. Somit ist der Werkzeugakku besonders sicher fertigbar. Besonders bevorzugt beträgt die Versorgungsspannung, auf die die Sekundärzellenbatteriespannung durch den im Werkzeugakkugehäuse integrierten Akku-Gleichspannungswandler angehoben wird, mehr als 42 Volt. Die Erfindung schließt diesbezüglich die Erkenntnis ein, dass Zwischenkreisgleichspannungen netzbetreibbarer Handwerkzeugmaschinen vorteilhafterweise oberhalb der Schutzkleinspannung von 42 Volt liegen. Nunmehr kann eine netzbetreibbare Handwerkzeugmaschine netzunabhängig mit einem Werkzeugakku versorgt werden.

Es hat sich als vorteilhaft herausgestellt, wenn die Sekundärzellenbatterie aus in Reihe geschalteten Sekundärzellen aufgebaut ist. Dies erlaubt eine einfache Montage des Werkzeugakkus. Bevorzugt entspricht die Batterie-Nennspannung der Summe der Nennspannungen der in Reihe geschalteten Sekundärzellen. Besonders bevorzugt beträgt die Batterie-Nennspannung zwischen 35 und 37 Volt. Die Batterie-Nennspannung kann 36 Volt betragen. Bevorzugt ist die Sekundärzellenbatterie aus Lithium-Ionen-Sekundärzellen gebildet.

In einer besonders bevorzugten Weiterbildung ist der Werkzeugakkuanschluss an einer äußeren Oberfläche des Werkzeugakkugehäuses angeordnet. Derart ist der Werkzeuganschluss leicht zugänglich und kann mit einem komplementären Versorgungsanschluss einer Handwerkzeugmaschine verbunden werden.

In einer bevorzugten Ausgestaltung ist ausschließlich die Versorgungsspannung am Werkzeugakku abgreifbar. Bevorzugt weist der Werkzeugakku genau einen Werkzeugakkuanschluss auf, an dem die Versorgungsspannung abgreifbar ist. Alternativ kann der Werkzeugakku derart ausgebildet sein, dass zusätzlich zur Versorgungsspannung die Batteriespannung extern am Werkzeugakku abgreifbar ist.

Es hat sich als vorteilhaft herausgestellt, wenn ein Anheben der Batteriespannung auf die Versorgungsspannung ausschließlich durch den Akku-Gleichspannungswandler erfolgt. Besonders bevorzugt ist der Werkzeugakku und/oder die Sekundärzellenbatterie frei von einer elektrischen Brückenschaltung. Somit ist der Werkzeugakku auch besonders verschleißarm.

In einer besonders bevorzugten Weiterbildung ist die Versorgungsspannung auf eine Zwischenkreisgleichspannung eines Zwischenkreises einer Handwerkzeugmaschine angepasst.

Bezüglich der netzbetreibbaren Handwerkzeugmaschine wird die Aufgabe dadurch gelöst, dass die Handwerkzeugmaschine einen mit dem Zwischenkreis elektrisch verbundenen Versorgungsanschluss aufweist, über den die Handwerkzeugmaschine netzunabhängig mit einer Versorgungsspannung eines Werkzeugakkus versorgbar ist.

Vorteilhafterweise kann nun eine netzbetreibbare Handwerkzeugmaschine, die beispielsweise auf einen 230-Volt-Wechselspannungsnetzbetrieb ausgelegt ist, direkt dadurch mit einem Gleichstrom aus einem Werkzeugakku versorgt werden, dass dieser über den Versorgungsanschluss in den Zwischenkreis der Handwerkzeugmaschine eingespeist wird. Vorteilhafterweise wird an den Versorgungsanschluss eine Spannung angelegt, die betragsmäßig genauso groß ist wie eine Zwischenkreisgleichspannung der Handwerkzeugmaschine im 230-Volt-Netzbetrieb. Somit besteht nun die Möglichkeit, eine für den Netzbetrieb ausgelegte Handwerkzeugmaschine auch netzunabhängig mit einem Werkzeugakku zu betreiben. In einer bevorzugten Ausgestaltung ist der Gleichrichter derart ausgelegt, dass die Zwischenkreisgleichspannung des Zwischenkreises im 230-Volt-Netzbetrieb größer als 42 Volt ist. Bevorzugt ist der Wert der Zwischenkreisgleichspannung des Zwischenkreises im 230-Volt-Netzbetrieb größer oder gleich dem Wert der Motorspannung.

In einer besonders bevorzugten Weiterbildung weist das Werkzeuggehäuse eine zur auswechselbaren Aufnahme eines Werkzeugakkus ausgebildete Aufnahmebucht auf. Der Versorgungsanschluss kann innerhalb der zur auswechselbaren Aufnahme eines Werkzeugakkus ausgebildeten Aufnahmebucht angeordnet sein.

Besonders bevorzugt ist der Versorgungsschluss elektrisch ausschließlich mit dem Zwischenkreis der Handwerkzeugmaschine verbunden.

Bezüglich des Werkzeugsystems wird die vorliegende Aufgabe durch ein Werkzeugsystem gelöst, das eine vorbeschriebene netzbetreibbare Handwerkzeugmaschine und einen vorbeschriebenen Werkzeugakku aufweist. Bevorzugt entspricht die am Werkzeugakkuanschluss des Werkzeugakkus abgreifbare Versorgungsspannung der Zwischenkreisgleichspannung des Zwischenkreises der Handwerkzeugmaschine im Netzbetrieb.

Weitere Vorteile ergeben sich aus der folgenden Zeichnungsbeschreibung. In der Zeichnung ist ein Ausführungsbeispiel der vorliegenden Erfindung dargestellt, die Zeichnung, die Beschreibung und die Ansprüche enthalten zahlreiche Merkmale und Kombinationen. Der Fachmann wird die Merkmale zweckmäßigerweise auch einzeln betrachten und zu sinnvollen weiteren Kombinationen zusammenfassen.

Es zeigt:

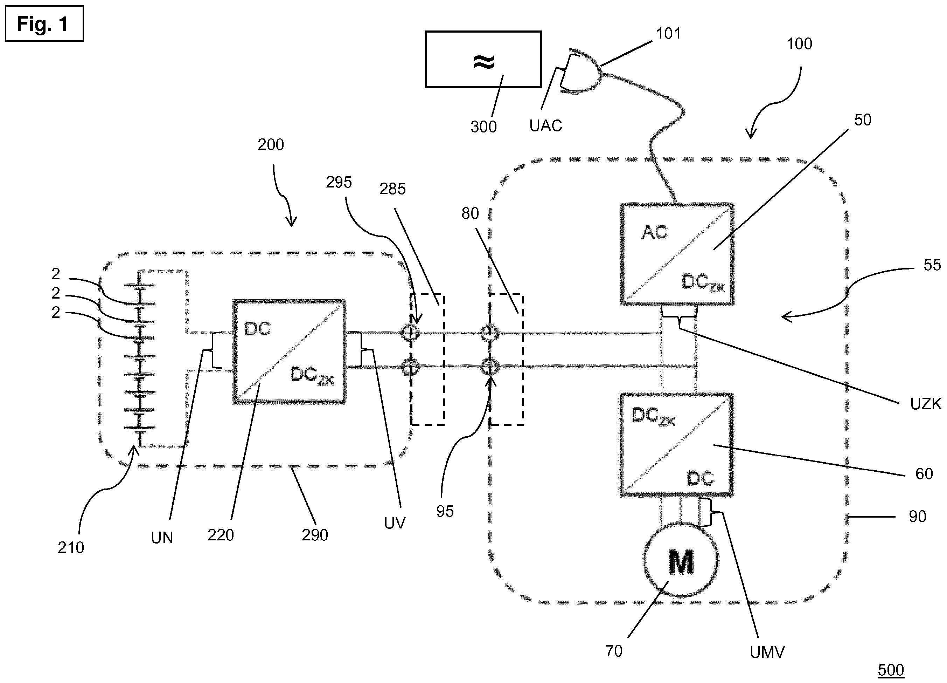

- Fig. 1: eine schematische Darstellung eines erfindungsgemäßen Werkzeugakkus zusammen mit einer erfindungsgemäßen netzbetreibbaren Handwerkzeugmaschine.

### Ausführungsbeispiel:

Fig. 1 zeigt einen erfindungsgemäßen Werkzeugakkumulator 200, der mit einer erfindungsgemäßen netzbetreibbaren Handwerkzeugmaschine 100 verbunden ist. Werkzeugakku 200 und Handwerkzeugmaschine 100 bilden ein erfindungsgemäßes Werkzeugsystem 500.

Der Werkzeugakku 200 in Fig. 1 weist ein Werkzeugakkugehäuse 290 mit einer darin angeordneten Sekundärzellenbatterie 210 auf. Die Sekundärzellenbatterie 210 ist aus in Reihe geschalteten Sekundärzellen 2 aufgebaut. Vorliegend sind die Sekundärzellen 2 Lithium-Ionen-Sekundärzellen und sind ausschließlich in Reihe geschaltet. Eine Batterie-Nennspannung der Sekundärzellenbatterie 210 beträgt vorliegend 36 Volt. Innerhalb des Werkzeugakkugehäuses 290 ist ein Akku-Gleichspannungswandler 220 integriert. Dieser ist eingangsseitig mit der Sekundärzellenbatterie 210 elektrisch verbunden. Ausgangsseitig ist der Akku-Gleichspannungswandler 220 elektrisch mit einem Werkzeugakkuanschluss 295 verbunden, der vorliegend an einer äußeren Oberfläche des Werkzeugakkugehäuses 290 angeordnet ist. Wie aus Fig. 1 ebenfalls ersichtlich ist, weist das Werkzeugakkugehäuse 290 an seiner Oberfläche eine mechanische Schnittstelle 285 auf, die vorliegend komplementär zu einer Aufnahmebucht 80 der netzbetreibbaren Handwerkzeugmaschine 100 ausgebildet ist.

Der im Werkzeugakkugehäuse 290 integrierte Akku-Gleichspannungswandler 220 ist vorliegend ausgebildet, die Batteriespannung UN von 36 Volt auf eine Versorgungsspannung UV anzuheben, die im vorliegenden Beispiel 150 Volt beträgt und damit einer Zwischenkreisgleichspannung UZK eines Zwischenkreises 55 der Handwerkzeugmaschine 100 im Netzbetrieb entspricht.

Die netzbetreibbare Handwerkzeugmaschine 100 der Fig. 1 ist vorliegend ein schematisch dargestellter Kombihammer. Die Handwerkzeugmaschine 100 weist ein Werkzeuggehäuse 90 mit einem darin angeordneten elektrischen Antriebsmotor 70 auf. Die Handwerkzeugmaschine 100 weist ebenfalls einen eingangsseitig mit einem Wechselspannungsnetz 300 verbindbaren Gleichrichter 50 auf. Vorliegend ist der Gleichrichter 50 über ein elektrisches Anschlusskabel mit einem Netzstecker 101 mit dem Wechselspannungsnetz 300 verbindbar. Der Gleichrichter 50 ist ausgebildet, eine Netzwechselspannung UAC von vorliegend 230 Volt in eine Zwischenkreisgleichspannung UZK eines Zwischenkreises 55 der Handwerkzeugmaschine 100 umzurichten. Der Gleichrichter 50 ist ausgelegt, dass die Zwischenkreisgleichspannung UZK des Zwischenkreises 55 im 230-Volt-Netzbetrieb größer als 42 Volt ist. Wie bereits eingangs erwähnt beträgt die Zwischenkreisgleichspannung UZK des Zwischenkreises 55 im vorliegenden Beispiel 150 Volt.

Die Handwerkzeugmaschine 100 weist weiter einen Motor-Gleichspannungswandler 60 auf, der eingangsseitig elektrisch mit dem Gleichrichter 50 und ausgangsseitig mit einem elektrischen Antriebsmotor 70 verbunden ist. Der Gleichspannungswandler 60 ist ausgebildet, die Zwischenkreisgleichspannung UZK in eine Motorversorgungsspannung UMV umzuwandeln.

Wie der Fig. 1 ebenfalls entnehmbar ist, weist die Handwerkzeugmaschine 100 einen Versorgungsanschluss 95 auf, der mit dem Zwischenkreis 55 elektrisch verbunden ist. Über den Versorgungsanschluss 95 kann die Handwerkzeugmaschine 100 netzunabhängig mit der Versorgungsspannung UV des Werkzeugakkus 200 versorgt werden. Im vorliegenden Beispiel weist die netzbetreibbare Handwerkzeugmaschine genau einen Versorgungsanschluss 95 auf, der elektrisch ausschließlich mit dem Zwischenkreis 55 verbunden ist.

Das Werkzeuggehäuse 90 der netzbetreibbaren Handwerkzeugmaschine 100 weist eine bereits eingangs erwähnte Aufnahmebucht 80 auf, die zur auswechselbaren Aufnahme des Werkzeugakkus 200 ausgebildet ist. Vorliegend ist der Versorgungsanschluss 95 auf einer Oberfläche der Aufnahmebucht 80 angeordnet, sodass der Werkzeugakku 200, wenn dieser über seine mechanische Schnittstelle 285 in der Aufnahmebucht 80 aufgenommen ist, gleichzeitig auch elektrisch über seinen Werkzeugakkuanschluss 295 mit dem Versorgungsanschluss 95 der Handwerkzeugmaschine 100 verbunden ist.

Die netzbetreibbare Handwerkzeugmaschine 100 und der Werkzeugakku 200 bilden ein Werkzeugsystem 500, wobei die am Werkzeugakkuanschluss 295 abgreifbare Versorgungsspannung UV der Zwischenkreisgleichspannung UZK des Zwischenkreises der Handwerkzeugmaschine im Netzbetrieb entspricht. Somit kann die für den Netzbetrieb mit 230 Volt konzipierte Handwerkzeugmaschine 100 netzunabhängig aus dem Werkzeugakku 200 versorgt werden.

### Bezugszeichenliste

- UAC: Netzwechselspannung
- UMV: Motorversorgungsspannung
- UN: Sekundärzellenbatteriespannung
- UV: Versorgungsspannung
- UZK: Zwischenkreisgleichspannung
- 2: Sekundärzellen
- 50: Gleichrichter
- 55: Zwischenkreis
- 60: Motor-Gleichspannungswandler
- 70: elektrischer Antriebsmotor
- 80: Aufnahmebucht
- 90: Werkzeuggehäuse
- 95: Versorgungsanschluss
- 100: Handwerkzeugmaschine
- 101: Netzstecker
- 200: Werkzeugakku
- 210: Sekundärzellenbatterie
- 220: Akku-Gleichspannungswandler
- 285: mechanische Schnittstelle
- 290: Werkzeugakkugehäuse
- 295: Werkzeugakkuanschluss
- 300: Wechselspannungsnetz
- 500: Werkzeugsystem

## Patentansprüche

1. Werkzeugsystem (500) enthaltend eine netzbetreibbare Handwerkzeugmaschine (100) sowie einen Werkzeugakku (200), zur Versorgung der Handwerkzeugmaschine (100), aufweisend ein Werkzeugakkugehäuse (290) mit einer darin angeordneten Sekundärzellenbatterie (210), die eine Sekundärzellenbatteriespannung (UN) aufweist, wobei die Handwerkzeugmaschine (100) einen Gleichrichter (50) und einen Motor-Gleichspannungswandler (60) - ein DC-DC-Wandler, der ausgangsseitig mit einem elektrischen Antriebsmotor (70) verbunden ist-enthält, die über einen Zwischenkreis (55) verbunden sind, **dadurch gekennzeichnet, dass** der Werkzeugakku (200) einen im Werkzeugakkugehäuse (290) integrierten Akku-Gleichspannungswandler (220) aufweist, der mit der Sekundärzellenbatterie (210) elektrisch verbunden und ausgebildet ist, die Sekundärzellenbatteriespannung (UN) auf eine Versorgungsspannung (UV) anzuheben, die an einem Werkzeugakkuanschluss (295) des Werkzeugakkus (200) abgreifbar ist wobei die Versorgungsspannung (UV) an eine Zwischenkreisgleichspannung (UZK) des Zwischenkreises (55) der Handwerkzeugmaschine (100) angepasst ist.

2. Werkzeugsystem (500) nach Anspruch 1,
**dadurch gekennzeichnet, dass** die Zellen-Nennspannung weniger als 42 Volt und die Versorgungsspannung (UV) mehr als 42 Volt beträgt.

3. Werkzeugsystem (500) nach Anspruch 1 oder 2,
**dadurch gekennzeichnet, dass** die Sekundärzellenbatterie (10) aus in Reihe geschalteten Sekundärzellen (2) aufgebaut ist und die Sekundärzellenbatteriespannung (UN) die Summe der Spannungen der in Reihe geschalteten Sekundärzellen (2) ist.

4. Werkzeugsystem (500) nach einem der vorangehenden Ansprüche,
**dadurch gekennzeichnet, dass** der Werkzeugakkuanschluss (295) an einer äußeren Oberfläche des Werkzeugakkugehäuses (290) angeordnet ist.

5. Werkzeugsystem (500) nach einem der vorangehenden Ansprüche,
**dadurch gekennzeichnet, dass** ein Anheben der Sekundärzellenbatteriespannung (UN) auf die Versorgungsspannung (UV) ausschließlich durch den Akku-Gleichspannungswandler (220) erfolgt und der Werkzeugakku und/oder die Sekundärzellenbatterie insbesondere frei von einer elektrischen Brückenschaltung ist.

## Claims

1. Tool system (500) comprising a mains-operable handheld power tool (100) and a tool battery (200), for supplying power to the handheld power tool (100), having a tool battery housing (290) with a secondary cell (210) which is arranged therein and has a secondary cell battery voltage (UN), wherein the handheld power tool (100) comprises a rectifier (50) and a motor DC-DC converter (60) - a DC-DC converter which, at the output end, is connected to an electric drive motor (70) - which are connected via a DC link (55), **characterized in that** the tool battery (200) has a battery DC-DC converter (220) which is integrated in the tool battery housing (290), is electrically connected to the secondary cell battery (210) and is designed to raise the secondary cell battery voltage (UN) to a supply voltage (UV) which can be tapped off at a tool battery connection (295) of the tool battery (200), wherein the supply voltage (UV) is adjusted to a DC DC-link voltage (UZK) of the DC link (55) of the handheld power tool (100).

2. Tool system (500) according to Claim 1, **characterized in that** the rated cell voltage is less than 42 volts and the supply voltage (UV) is more than 42 volts.

3. Tool system (500) according to Claim 1 or 2, **characterized in that** the secondary cell battery (10) is made up of secondary cells (2) which are connected in series and the secondary cell battery voltage (UN) is the sum of the voltages of the secondary cells (2) which are connected in series.

4. Tool system (500) according to one of the preceding claims, **characterized in that** the tool battery connection (295) is arranged on an outer surface of the tool battery housing (290).

5. Tool system (500) according to one of the preceding claims, **characterized in that** the secondary cell battery voltage (UN) is raised to the supply voltage (UV) solely by the battery DC-DC converter (220) and the tool battery and/or the secondary cell battery are/is in particular free of an electrical bridge circuit.

## Revendications

1. Système d'outil (500) comprenant une machine-outil portative (100) pouvant fonctionner sur le réseau ainsi qu'un accumulateur d'outil (200) destiné à alimenter la machine-outil portative (100), possédant un boîtier d'accumulateur d'outil (290) dans lequel est disposée une batterie de cellules secondaires (210), laquelle présente une tension de batterie de cellules secondaires (UN), la machine-outil portative (100) comprenant un redresseur (50) et un convertisseur de tension continue de moteur (60), un convertisseur CC/CC, dont le côté de sortie est relié à un moteur d'entraînement (70) électrique, lesquels sont reliés par le biais d'un circuit intermédiaire (55), **caractérisé en ce que** l'accumulateur d'outil (200) possède un convertisseur de tension continue d'accumulateur (220) intégré dans le boîtier d'accumulateur d'outil (290), lequel est relié électriquement à la batterie de cellules secondaires (210) et configuré pour élever la tension de batterie de cellules secondaires (UN) à une tension d'alimentation (UV) qui peut être prélevée au niveau d'une borne d'accumulateur d'outil (295) de l'accumulateur d'outil (200), la tension d'alimentation (UV) étant adaptée à une tension de circuit intermédiaire (UZK) du circuit intermédiaire (55) de la machine-outil portative (100).

2. Système d'outil (500) selon la revendication 1, **caractérisé en ce que** la tension nominale de cellule est inférieure à 42 V et la tension d'alimentation (UV) est supérieure à 42 V.

3. Système d'outil (500) selon la revendication 1 ou 2, **caractérisé en ce que** la batterie de cellules secondaires (10) est constituée de cellules secondaires (2) branchées en série et la tension de batterie de cellules secondaires (UN) est la somme des tensions des cellules secondaires (2) branchées en série.

4. Système d'outil (500) selon l'une des revendications précédentes, **caractérisé en ce que** la borne d'accumulateur d'outil (295) est disposée sur une surface extérieure du boîtier d'accumulateur d'outil (290).

5. Système d'outil (500) selon l'une des revendications précédentes, **caractérisé en ce qu'**une élévation de la tension de batterie de cellules secondaires (UN) à la tension d'alimentation (UV) s'effectue exclusivement par le convertisseur de tension continue de batterie (220) et l'accumulateur d'outil et/ou la batterie de cellules secondaires est notamment exempt d'un circuit en pont électrique.
